# EUROPEAN PATENT SPECIFICATION

(11) **EP 1 875 449 B1**
(45) Date of publication and mention of the grant of the patent: **17.06.2009**
(21) Application number: 06732997.9
(22) Date of filing: 11.04.2006
(51) Int. Cl.: G08B 13/181, G08B 13/196, G01S 17/10

(54) **SECURITY SYSTEM, AND ALARM VERIFICATION SYSTEM**
SICHERHEITSSYSTEM UND ALARMVERIFIKATIONSSYSTEM
SYSTEME DE SECURITE, ET SYSTEME DE VERIFICATION DES ALARMES

(30) Priority: 12.04.2005 NL 1028743
(43) Date of publication of application: 09.01.2008
(73) Proprietor: Internova Holding BVBA, 2838 Meerle (BE)
(72) Inventor: VAN SCHIJNDEL, Johannes, Petrus, Marinus, Cornelis, B-2838 Meerle (BE)
(74) Representative: Griebling, Onno
(86) International application number: PCT/NL2006/000190
(87) International publication number: WO 2006/115397

(56) References cited:
- WO-A-00/72573
- US-A1- 2004 118 624
- US-A1- 2004 233 414
- US-A1- 2005 068 175

## Description

The present invention relates in general to the field of security systems for securing for example buildings and terrains against unwanted visitors.

There are security systems of various kinds, functioning on the basis of different principles. Passive security systems are intended to make entering difficult for an intruder: in this category are fences, doors, windows, locks, etc. Depending on the quality of such passive security systems, it takes more or less time for an intruder to pass through the security system, but once he has succeeded, he can carry on unhindered.

Active security systems comprise an alarm installation intended for establishing that an undesired situation occurs, and to give the alarm in such a case. Essential parts of such an active security system are a detector system, which detects the undesired situation and generates a corresponding detector output signal, and a signal processing system, which processes the detector output signal and performs a suitable action.

US 2004233414 discloses measuring the distance of an object to a measuring apparatus by means of light and comparing to a reference in order to detect movement of the object.

In a simple embodiment, the signal processing system is adapted for generating sound signals and/or light signals. The intention of this is that the attention of bystanders is drawn, who subsequently come closer and disturb the intruder, and/or warn emergency services such as the police. In practice, unfortunately, bystanders usually prove not to interfere in the situation, so that the intruder has more trouble from the noise than from any active intervention.

In a more advanced embodiment, the signal processing system is adapted to directly warn emergency services. In that case, the sound signal and light signals may be omitted (silent alarm).

The present invention particularly relates to an advanced security system with signal processing and signal assessment.

A problem of security systems with signal processing is that they can make errors: not only can they fail in detecting an undesired situation and then erroneously take no action, but the opposite may also occur: that they take action while actually nothing is happening. Errors of the type last-mentioned will in general be indicated as "false alarm". False alarms may originate from disturbances in the system, operating errors by the user, and reaction of the system on events such as a door being blown open by the wind, a pet walking around, etc.

In practice, it has proven that by far the largest part of the alarms is false. This is undesired because false alarms erroneously take up much time of the emergency services. It may even happen that emergency services refuse to react to an alarm of an alarm installation of which it has proven that it regularly generates false alarms.

The frequent occurrence of false alarms has led to guarding services coming into existence. A guarding service may be seen as a link between a security installation and an emergency service: the alarm of the security installation is sent to an operator of the guarding service, and, depending on the situation, this person will take action. The action of the operator may for example be:
- contacting the resident of the house concerned by telephone;
- sending guarding personnel to the house concerned;
- calling in the police or other emergency services.

The action of the operator is mostly a sequence of the above-mentioned actions. Usually, the guarding services even have as a protocol that they will only call in the police after they have had contact with the resident (or a substituting person), and/or after guarding personnel has established at the house concerned that indeed something is going on.

All this offers the advantage that the number of false alarms reaching the police will reduce drastically. A great disadvantage, however, is that in the cases that there is actually something going on, such as a burglary, the reaction time of the police has increased considerably.

Further, it is a problem, depending on national legislation, that the guarding services have to comply with all kinds of strict regulations. In this context, a "guarding service" is to be considered a company that can receive alarms and is authorized to call in emergency services such as the police. The guarding services function as a sort of filter between alarm installation and the police, and thus reduce the number of false alarms reaching the police. However, the number of false alarms being generated by alarm installations remains the same. The guarding services now have the difficult task to assess all incoming alarms. If they erroneously do not take action to a real alarm, they could be held liable. On the other hand, if they pass on false alarms to the police too often, they can be punished by the authorities, and they may even lose their license.

A general object of the present invention is reducing the above-mentioned problems.

An important object of the present invention is providing an alarm installation with an improved reliability, of which the number of false alarms is considerably lower than in the case of known alarm installations.

A further important object of the present invention is providing a detection system having an improved accuracy and reliability.

A further important object of the present invention is providing a security system that can react to alarms quickly and accurately.

According to a first aspect of the present invention, an alarm installation comprises a primary detection system and a local verification system which verifies an observation of the primary detection system. Only when the local verification system confirms the detection by the primary detection system, the alarm installation gives an alarm.

The verification system is capable to detect an undesired situation such as an intruder, based on a functioning principle which differs from the functioning principle of the primary detection system. Preferably, the verification system comprises a controllable camera as well as an image processing device which is able to analyse the camera images. The controllable camera is directed to a location where the primary detection system has detected an event.

Further, according to a further aspect of the present invention, a primary detection system is provided which is capable to detect a movement in a large terrain, at distances between zero and several hundreds of metres, and to accurately determine the location of this movement. This primary detection system functions on the basis of pulsed laser light: a laser pulse is emitted in a particular direction, and the distance to a reflecting object is determined from the reflected light. A short time later, again a laser pulse is emitted in the same direction, and the distance to the reflecting object is determined again from the reflected light; differences indicate movement of this object, while the location of the object is accurately known from the combination of direction of the laser pulse and reflection distance.

Further, according to a further aspect of the present invention, a security system is provided, comprising an alarm installation with a primary detection system and a local verification system, as well as an external, central verification system. The alarm system sends real-time image signals of the observed event to the central verification system, where these images are assessed by a verifier, i.e. a verifying person.

The verifier can recognize false alarms, including events that correctly lead to an alarm state of the alarm installation but which not necessarily have to lead to calling in a guarding service. Only when the verifier establishes from the observed images that an undesired event is going on, he will pass on the alarm to the guarding service concerned. The central verification system thus functions as a filter between the alarm installation and guarding service.

These and other aspects, features and advantages of the present invention will be further explained by the following description with reference to the drawings, in which same reference numerals indicate same or similar parts, and in which:
figure 1 is a block diagram schematically illustrating the construction of an embodiment of a security system according to the present invention;
figure 2a is a block diagram illustrating an embodiment of a detection system according to the present invention;
figure 2b is a schematic overview of a situation to be secured;
figure 3 is a block diagram illustrating an embodiment of a local verification system according to the present invention; and figure 4 is a block diagram illustrating an embodiment of a central verification system according to the present invention.

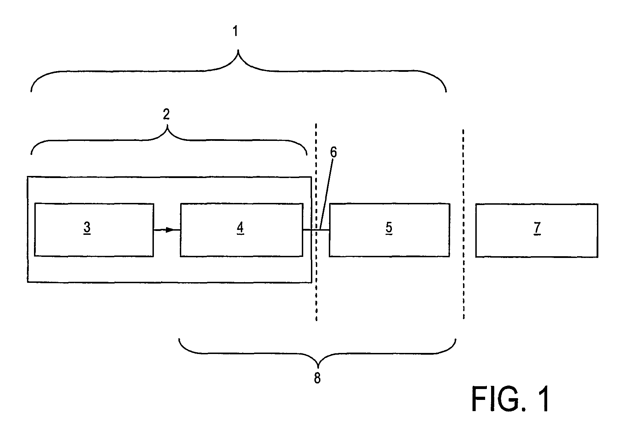

Figure 1 is a block diagram schematically illustrating the construction of a security system 1 according to the present invention. The security system 1 comprises an alarm installation 2, which is installed at an object to be secured, for example a building. The alarm installation 2 comprises a primary detection system 3 as well as a local verification system 4. The security system 1 further comprises a central verification system 5, which is situated at distance from the alarm installation 2, and is coupled to the alarm installation 2 via a communication connection 6. The communication connection 6 may be a wired or wireless connection, and comprises for example a standard telephone line.

Since the central verification system 5 is situated at distance from the alarm installation 2, and may for example even be situated in another city, the central verification system 5 is also indicated by the phrase "external verification system". The combination of local verification system 4, communication conection 6 and external verification system 5 will also be indicated by the phrase "verification assembly" 8.

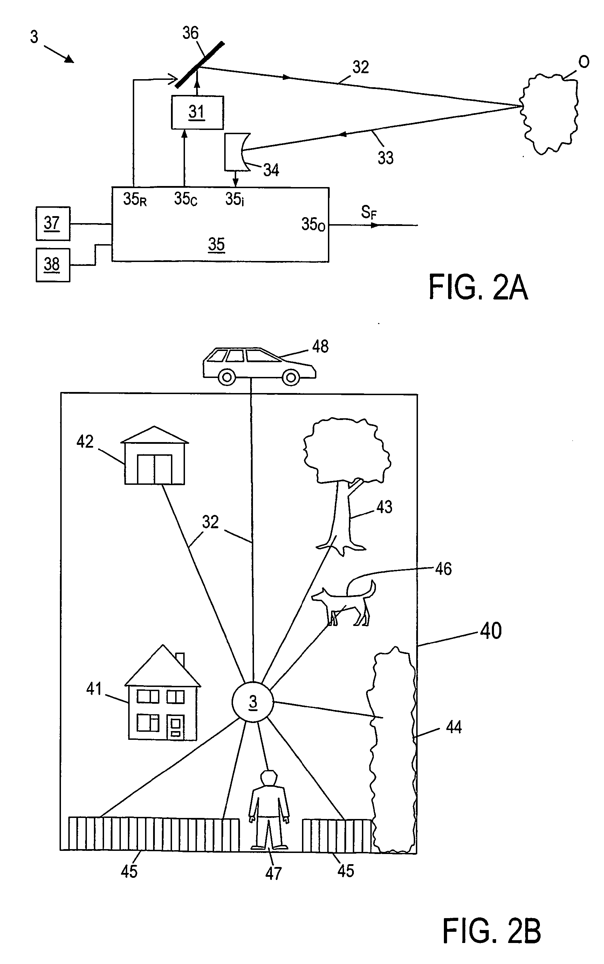

Figure 2A is a block diagram illustrating a preferred embodiment of the detection system 3 proposed by the present invention. The detection system 3 according to the present invention comprises a controllable laser source 31 adapted for generating a narrow laser beam 32, as well as a sensor 34 for receiving reflected laser light 33. For safety reasons, the laser light is preferably generated at such a wavelength and such a power, that it is unharmful to people and animals. The applied wavelength is preferably in the infrared wavelength range.

Since laser sources, and sensors for receiving laser light, are known per se, it is not necessary to further explain the construction and functioning thereof.

The detection system 3 is adapted to measure the distance to an object O with the laser beam 32. Since distance measuring instruments based on laser beams are known per se, an extensive description thereof is not necessary here.

The detection system 3 further comprises a signal processing device 35, that receives an output signal of the sensor 34 at a signal input 35i. The signal processing device 35 has a control output 35c coupled to a control input of the controllable laser source 31.

The signal processing device 35 is adapted to send a pulse command to the controllable laser source 31, which, in response to receiving such a pulse command, is adapted to generate a laser pulse signal. It can be that the controllable laser source 31 continuously generates its laser beam 32, and that the laser pulse signal is for example a modulation or an interruption of the laser beam 32. Preferably, however, the controllable laser source 31 provides a relatively short laser beam pulse in response to receiving the pulse command, and thereafter, the laser beam is OFF until the next pulse command.

The signal processing device 35 is further adapted to measure the time difference between the point in time of the pulse command and the point in time of receiving the output signal of the sensor 34, and, based on this time difference, to calculate a distance signal being representative for the distance between the laser source 31 and an object O which is the cause of the reflected light 33. It should be clear that such an object O is the object which, measured along the line of sight of the laser source 31, i.e. the direction of propagation of the beam 32, is situated closest to the laser source 31. Further, it should be clear that the nature and texture of the object O may have influence on the intensity and spatial distribution of the reflected light 33, and thus on the magnitude of the output signal of the sensor 34, but not on the point in time of this output signal.

It is noted that the distance signal is in fact representative for the path travelled by the light 32, 33, thus a combination of the distance of the object to the light source 31 and the distance of the object to the sensor 34. Therefore, it is preferable that the sensor 34 is located close to the light source 31.

It is further noted that the most accurate results are to be expected if the light beam is a very narrow light beam, as is easily to be obtained with a laser beam. In that case, the observation direction is well-defined.

In this way, it is possible, taking the propagation velocity of light into account, and possibly taking the reaction delays of the laser source 31 and the sensor 34 into account, to accurately determine the distance to the first object O in the direction of the beam axis. If, by way of example, this distance is 15 m, the expected time difference between pulse command and sensor pulse is approximately 0,1 µs, which is very well measurable with modern electronic circuits. However, as will appear from the following, it is not necessary to exactly know this distance of the object O: the detection system 3 is sensitive to distance VARIATIONS, and these are also expressed in variations in the calculated distance signal, even if this would be inaccurate in absolute sense. After all, the distance variations directly lead to delay time variations of the laser light from source via object to sensor. It therefore suffices for the signal processing device 35 to register the said time difference as being representative for the actual object distance. Hereinafter, all these possibilities will be deemed to be covered by the phrase "distance signal".

The signal processing device 35 is further adapted to generate a control signal for the laser source 31, in order to vary the direction in which the laser source 31 emits the laser light 32. To that end, the laser source 31 may be mounted entirely adjustable relative to the fixed world, but it is also possible that the laser source 31 is provided with controllable optics 36, such as one or more rotatable mirrors. Figure 2A schematically illustrates an embodiment variation with controllable optics 36; for setting the direction of the laser light 32, the signal processing device 35 has a direction control output 35r coupled with the controllable optics 36 of the laser source 31.

The signal processing device 35 can gradually change the direction of the laser beam 32. Preferably, however, the signal processing device 35 is adapted to determine a large (but limited) number of fixed directions, and to control the controllable optics 36 of the laser source 31 only in one of the positions corresponding to these fixed directions. The laser beam 32 will thus only be emitted in a discrete number of fixed directions.

The number N of these fixed directions may be a predetermined fixed number, but may also be randomly determined by the signal processing device 35 within particular boundaries during an initialization procedure. The number of directions may for example be in the order of 100. The signal processing device 35 may control the controllable optics 36 to go through the corresponding positions in a predetermined fixed order, but it is also possible to go through the different positions in a random order.

Thus, the combination of laser source 31 and signal processing device 35 is suitable for generating a set of N detection beams with mutually different detection directions, which beams are switched on after each other.

When the detection system 3 is switched on, the signal processing device 35 first enters a learning mode, in which an initialization procedure is performed. In the initialization procedure, the signal processing device 35 determines the N detection directions, and performs at least one distance measurement with each of the N detection beams for obtaining N reference distance signals. The combination of the N reference distance signals and the corresponding N detection directions will also, for convenience sake, be indicated by the phrase "reference distance profile". The reference distance profile is stored in a memory 37 associated with the signal processing device 35.

The reference distance profile thus contains position information of objects on a terrain 40 to be guarded, such as a house 41, a shed 42, a tree 43, shrubs 44, a fence 45. It is noted that the detection system 3 according to the present invention is excellently suitable for securing vast terrains, varying from gardens to large storage terrains, airfields, etc., but may also be implemented indoors, wherein then the same explanation is applicable.

After the learning mode, the signal processing device 35 enters a securing mode, in which the signal processing device 35 regularly controls the detection beams 32. Also in this case, the signal processing device 35 may control the detection beams 32 in a fixed order, or at random.

With each detection beam 32, the signal processing devices again obtains a distance signal, which, by the signal processing device 35, is compared with a distance signal obtained before with the same detection bundle. This distance signal obtained before may be the reference distance signal which is obtained during the initialization procedure, and which is thus the same during each following distance measurement. The distance signal obtained before may however also be the distance signal which was obtained the last time during the securing mode with the same detection beam, and may thus vary all the time. To that end, the signal processing device 35 may be provided with a second memory 38, in which the distance signals of the previous detection are stored, and in which, after the comparison, the newly obtained distance signals are stored.

The combination of the N distance signals and the corresponding N detection directions will also, for the sake of convenience, be indicated by the phrase "distance profile". The second memory thus contains the distance profile of a short while ago: this distance profile will be indicated by the phrase "previous distance profile".

If all objects are stationary, all distance signals of the same detection bundle are always equal, i.e. the distance profile is constant and is always equal to the previous distance profile and to the reference distance profile. If changes in the distance profile occur, this is indicative for the event of displacements.

Displacements may originate because the fixed objects, or parts thereof, move; an example hereof is moving of the leaves and/or branches of a tree 43 resulting from the wind, or moving of a door of the shed 42 resulting from the wind. Displacements may also originate because objects displace relative to the detection system; an example hereof is an animal 46 walking on the terrain 40. Another example is a human 47 walking on the terrain 40.

The signal processing device 35 is preferably provided with an intelligent signal processing program, which is capable of analysing the changes of the distance profile in order to distinguish between distance profile changes which possibly indicate an event on the one hand and distance profile changes which are very likely not associated with an event on the other hand. The signal processing device 35 may for example use the amount of change as criterion for this: changes over distances of no more than several centimetres are most probably caused by leaves. For this, the signal processing device 35 may for example also use the size of the moving object and the nature of the movement as criterion: if multiple detection beams detect a rhythmic back and forth going movement, this may indicate the rhythmic back and forth movement of a tree in the wind.

The signal processing device 35 may also have information at its disposal relating to the dimensions of the terrain 40 to be secured. If a change of the distance profile is caused by an object outside the terrain 40, as schematically illustrated at 48, the signal processing device 35 may establish this by analysing the distance signal, and may then ignore the change concerned.

The signal processing device 35 has thus built-in one or more comparison threshold characteristics. If one or more of the distance profile changes exceed one or more of such comparison threshold characteristics, this is interpreted by the signal processing device 35 as a possible "event", and the signal processing device 35 switches on the local verification system 4.

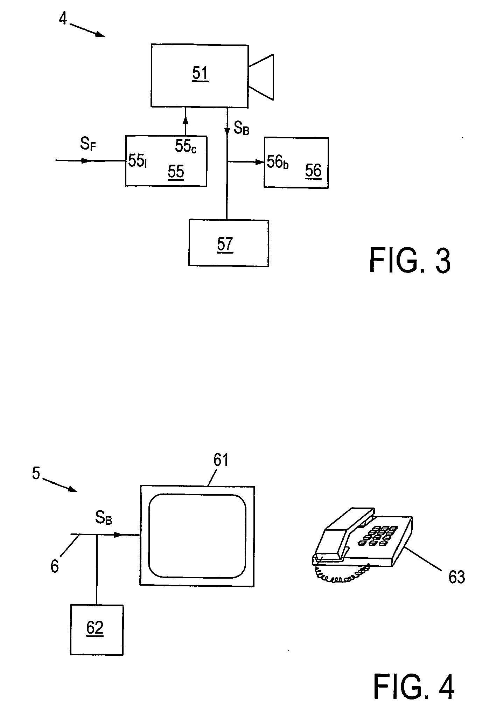

Figure 3 is a block diagram illustrating a verification system 4 according to the present invention. Important part of the verification system 4 is a camera 51, which is controllable as regards to viewing direction and focussing distance. Although the camera 51 may in principle be an analogue camera, it is preferable that the camera 51 is a digital camera. The camera 51 may normally be OFF, and may be switched on by the signal processing device 35 of the detection system 3. Preferably, however, the camera is ON continuously for improving the reaction speed.

The camera 51 is associated with a camera control circuit 55, which has a signal input 55i coupled with a signal output 55o of the signal processing device 35. The signal processing device 35 is adapted to generate a focussing signal Sf at its signal output 35o, which signal comprises information about the suspected location (direction and distance) where the signal processing device 35 has established a movement. The camera control circuit 55 has a control output 55c coupled with a control input of the camera 51, and, in response to receiving the focussing signal Sf, is adapted to adjust the camera 51 and to focus on the suspected location indicated by the focussing signal Sf. The camera 51 now generates image signals S_{B} of the suspected location, which image signals S_{B} are received by an image processing device 56 at an input 56b thereof.

The image processing device 56 is provided with software for processing the image signals S_{B} and for recognizing the images defined thereby. Since powerful image processing software and image recognition software is known per se, a further explanation thereof is not necessary. Thanks to this software, the image processing device 56 is capable of analysing the cause of the movement established by the detection system 3.

Thus, the image processing device 56 is, for example, capable of recognizing movements of leaves, or of a tree as a whole, wherein similar criteria may be used as described above in relation to the detection system 3. Also the number of pixels where a movement is established may give information about the size of the moving object, and the image processing device 56 may for example have built-in as threshold that objects smaller than a predetermined dimension are not threatening.

The image processing device 56 is also, for example, capable of recognizing an animal 46 (cat, dog, rabbit, deer), and of concluding that the cause of the movement established by the detection system 3 is unharmful.

On the other hand, the image processing device 56 is for example capable of recognizing a person 47, and of establishing that it is indeed a potentially threatening event. The image processing device 56 is adapted to switch on the external, central verification system 5 in response to this observation. Figure 4 is a block diagram schematically illustrating several components of the central verification system 5.

Via the communication line 6, the alarm installation 2 passes the image signals S_{B} on to the central verification system 5 in real time, where the image signals S_{B} are displayed on a screen 61. A verifier watching the screen can thus directly see what is going on.

A great advantage of the system proposed by the present invention is that, from the moment that the central verification system 5 is switched on, the verifier directly receives good images of the location where possibly an event is taking place; so he does not need to search. The verifier can then also recognize innocent causes: when the detection system 3 is triggered by an animal which is not recognized by the local verification system, the verifier is able to recognize it and to intercept an alarm. When the verifier establishes that an event is indeed taking place, for example that an unauthorized person 47 has entered the terrain, the verifier takes action. This action may for example be: calling in a guarding service 7, for example by means of a telephone 63. Thanks to the present invention, calling in a guarding service can thus happen very quickly, without much delay, and with a strongly reduced chance of calling in wrongfully.

Another action may be: speaking to the unauthorized person 47 (through a microphone and a loudspeaker at the location of the object O to be guarded), which is not shown for the sake of simplicity. This may have as a result that this person, knowing that he has been seen, leaves the terrain before having actually broken in. In this way, the system may prevent a burglary, in contrast to classic burglar alarm systems, which only come into action when establishing a burglary. As the unauthorized person 47 is already observed on the terrain 40 outside the house 41, possible emergency services (guards, police), in the system according to the invention, may already be sent to the object O to be guarded before the burglary actually takes place; this in contrast to classic burglar alarm systems, wherein emergency services are only activated after the burglary has taken place.

If the object O to be guarded is provided with a burglar alarm system, another action of the verifier may be: remotely activating this burglar alarm system.

The local verification system 4 functions as a first filter, which strongly prevents wrongful alarms from reaching the verifier. The alarms that do reach the verifier have an increased chance that they are related to an actual event, and the verifier can better concentrate on this kind of alarms. The verifier functions as a second filter, i.e. a human filter: the guarding service 7 is only called in after it has been established by a person that there is actually something going on. The system thus offers a functionality which is similar to the situation that an object O to be guarded is provided with a guarding person on the spot.

Advantageously, the central verification system 5 is provided with an image memory 62, in which the incoming image signals S_{B} are stored. These image signals S_{B} stored in the image memory 62 of the central verification system 5 may possibly be used as evidence: evidence against the unauthorized person 47, but also as evidence that the verifier has taken a correct action. When the guarding service 7 calls in the police, but the police, on arrival, do not find any unauthorized people at the terrain 40, one could consider the alarm as a false alarm; the image signals S_{B} stored in the image memory 62 of the central verification system 5 may prove the contrary. However, also the opposite may happen: that the verifier has not observed any event such as an unauthorized person in the images received and has thus not called in the guarding service, while it proves later that there has actually been broken in; then too, the image signals S_{B} stored in the image memory 62 of the central verification system 5 may prove that the verifier has acted correctly.

Preferably, the local verification system 4 is provided with an image memory 57, in which the image signals S_{B} can be stored even already before the image processing device 56 has completed its analysis of the image signals and the image connection with the central verification system 5 has been established. Images can therefore be stored in the image memory 57 directly from the moment on that the camera 51 makes images of the suspected location, in response to the initial signal of the initial detection system 3. In principle, it could be possible that an unauthorized person is in view only very shortly, and is directly observed by the initial detection system 3 and the camera 51, but has already disappeared at the moment that the image connection with the central verification system 5 has been established. In that case, the verifier can ask the alarm installation 2, through the connection 6, to show the stored images from the memory 57, and he may possibly take action based on that. Also these images arriving at the verifier are stored in the memory 62 at the central verification system 5 for the same reasons as mentioned above.

It has been mentioned in the preceding that, by the camera control circuit 55, the camera 51 is directed towards and focussed on the suspected location where the signal processing device 35 of the detection system 3 has established a movement. The camera control circuit 55 can hold the camera 51 in this position if no new focussing signal Sf is received from the signal processing device 35. However, it is possible that an object, such as for example an animal 46 or a person 47, is moving over the terrain 40, which is observed by the detection system 3, in which case a corresponding focussing signal Sf is given to the camera control circuit 55, which adjusts the direction and focussing of the camera 51. Then, the camera 51 thus moves along with the object, which simplifies the verification process for the verifier.

It is also possible that the detection system 3 observes multiple moving objects, and provides information (in the focussing signal Sf) about the number of moving objects and their respective direction/distance to the camera control circuit 55. There are different ways in which the camera control circuit 55 can deal with this information.

If the detected objects are situated relatively close to each other, the camera control circuit 55 can adjust the camera 51 in such a way that two or more objects are within the view field of the camera and are thus displayed on the same image.

Alternatively, it is possible that the camera control circuit 55 alternatingly provides images of the different objects. Particularly when the camera 51 is a digital camera, it is possible to change the settings of the camera very quickly. The camera control circuit 55 can then go through a cycle of adjusting to an object established, recording a sequence of images to be able to show the movement, and adjusting to a next object. The number of images per sequence may be adjustable. It offers advantages if the local verification system 4, when it transfers the camera images to the central verification system 5, also transmits information about the number of objects, and further transfers information per image about the serial number of the object to which that image relates. This enables the central verification system 5 to select the received images according to object number. The verifier may establish that object 1 is for example an animal and is thus innocent, but he may want to observe object 2 longer: the central verification system 5 may then be adapted to ignore the images of object 1 in response to an order of the verifier. It is even possible that the communication connection 6 allows the central verification system 5 to give an order to the local verification system 4 with the meaning that object 1 can be ignored, so that the local verification system 4 does not need to make and send images of this object anymore. Then, there is more attention for the remaining objects.

As variation on this, it is possible that the camera control circuit 55 combines multiple images, obtained from multiple objects, to a single image (split image; matrix).

It will be clear to a person skilled in the art that the invention is not limited to the exemplary embodiments discussed in the preceding, but that several variations and modifications are possible within the protective scope of the invention as defined in the attached claims.

The camera 51 may for example be provided with a zoom function which is controllable by the camera control circuit 55, with which it is possible to adjust the size of the scene to be displayed (viewing angle) to the size of a moving object established. The signal processing device 35 may estimate this size based on the number of detection beams observing the same movement.

The alarm installation 2 comprises, as described, a combination of a detection system and a local verification system, comprising a controllable camera, of which viewing direction and focus distance are controlled based on location information obtained with the detection system. As example of a suitable detection system, suitable for cooperating with the verification system, an inventive system based on pulsed laser beams has been described. However, the invention is not limited hereto. Other detection systems could also be suitable, provided that they are capable of generating a signal that can identify a suspected location. A simple example of such a suitable detection system is a window-pane breaking detector: when a window-pane breaks and a detector associated with this window-pane detects this, it is obviously known which window-pane is broken, and thus what the location of the breaking is.

Further, the local verification system 4 could be provided with a heat sensor, or the camera 51 could be sensitive to infrared radiation.

## Claims

1. Method for detecting a moving object (46; 47) on a terrain (40), comprising the steps of:
measuring a distance profile of the terrain (40) relative to a measuring apparatus (31, 34);
comparing the measured distance profile with a reference distance profile;
establishing a moving object if the measured distance profile differs from the reference distance profile;
wherein the step of measuring a distance profile of the terrain (40) comprises the step of measuring the distance from a measuring apparatus (31, 34) to the closest object (41, 42, 43, 44, 45, 46, 47) in a large number (N) of directions and in a random order, based on a light pulse, preferably laser light, emitted by the measuring apparatus and reflected by the object.

2. Method according to claim 1, wherein the reference distance profile is a distance profile of the same terrain (40) measured earlier.

3. Method according to claim 2, further comprising the steps of:
in a learning mode, measuring the distance profile of the terrain (40);
subsequently using this distance profile measured in the learning mode as reference distance profile in each subsequent measurement for detecting a moving object.

4. Method according to claim 2, wherein the newly measured distance profile is always used as reference distance profile in the subsequent measurement.

5. Method according to any of the claims 1-4, further comprising the step of issuing a report signal (S_{F}) containing information about the direction and distance of the moving object detected, if a moving object (46; 47) is detected.

6. Method for locally verifying a report of a moving object on a terrain (40), the method comprising the steps of:
receiving a report signal (S_{F}) indicating the appearance of a potential event detected, wherein the report signal (S_{F}) is issued with the method of claim 5;
directing and focussing a camera (51) based on the said information;
the method preferably further comprising the steps of:
receiving image signals (S_{B}) from the camera;
analysing the image signals received from the camera using image recognition apparatus or image recognition software.

7. Method according to claim 6, further comprising the step of:
transferring image signals (S_{B}) from the camera to an external verification system (5) if the analysis result is indicative for an actual event.

8. Method according to claim 7, wherein real-time image signals (S_{B}) from the camera are transferred to the external verification system.

9. Method according to claim 7, further comprising the steps of:
storing the image signals (S_{B}) from the camera in an image memory (57) in response to receiving the report signal (S_{F}); and transferring image signals (S_{B}) from the image memory to the external verification system.

10. Method for securing a terrain (40), comprising the steps of:
in a first step, detecting a potential moving object, and
issuing a report signal (S_{F}) containing information about the direction and distance of the detected potential moving object, wherein the report signal (S_{F}) is issued with the method of claim 5;
in a second step, locally verifying the report of the potential moving object with the method of claim 6;
in a third step, transferring camera images (S_{B}) to an external verification system (5).

11. Method according to claim 10, further comprising a fourth step in which a verifier of the external verification system (5) calls in a guarding service (7) or the like.

12. Primary detection system for detecting a moving object (46; 47) on a terrain (40), the system comprising means (31, 34, 35) for measuring a distance profile of the terrain (40) relative to a measuring apparatus (31, 34), wherein said means (31, 34, 35) comprise:
- a controllable light source (31) adapted for generating a detection light beam (32) with a pulse-shaped light signal, which light source (31) preferably comprises a laser;
- a sensor (34) for receiving reflected light (33);
- a signal processing device (35), with a signal input (35i) for receiving an output signal from the sensor (34), and with a signal output (35o) for issuing a movement report signal (S_{F});
wherein the signal processing device (35) is adapted to calculate a distance signal from the signal received from the sensor, which distance signal is representative for the distance from a reflecting object (O) to the light source (31) and the sensor (34);
wherein the signal processing device (35) is adapted to monitor the distance signal in order to be able to detect variations therein;
and wherein the signal processing device (35) is adapted to generate a movement report signal (S_{F}) at its signal output (35o) when detecting a variation of the distance signal;
wherein the distance profile comprises a combination of a number (N) of detection directions relative to a measuring apparatus (31, 34), and with distance signals corresponding to the respective detection directions, which signals are representative for the distances from the measuring apparatus (31, 34) to an object (O) as measured along the respective detection directions;
wherein the light source (35) is adapted to emit multiple detection light beams (32) in multiple directions, and to emit a detection light beam (32) in a direction determined by the direction control signal in response to a direction control signal received at a control input;
and wherein the signal processing device (35) is adapted for generating direction control signals for the light source (35) in a random order.

13. Detection system according to claim 12, wherein the signal processing device (35) is adapted for defining a number (N) of detection directions;
and wherein the signal processing device (35) is adapted for repeatedly measuring a distance profile of the terrain (40) by successively sending direction control signals to the controllable light source (35), which direction control signals correspond to the defined (N) detection directions.

14. Detection system according to claim 13, wherein the signal processing device (35) is adapted to always generate the direction control signals in the same order.

15. Detection system according to any of claims 12-14, wherein the signal processing device (35) has a control output (35c) coupled with a control input of the light source (31);
wherein the signal processing device (35) is adapted to generate at its control output (35c) a pulse command signal for the light source (31);
and wherein the light source (31) is adapted to generate a pulse-shaped light signal in response to receiving the pulse command signal at its control input.

16. Detection system according to claim 15, wherein the signal processing device (35) is adapted to take as distance signal the time difference between the point in time of generating the pulse command signal and the point in time of receiving the sensor output signal.

17. Detection system according to any of the claims 12-16, further comprising a memory (37; 38) for storing at least one measured distance signal;
wherein the signal processing device (35) is adapted to compare a momentaneously calculated distance signal with the distance signal stored in the memory (37; 38), and to interpret an established difference as a movement of the object.

18. Detection system according to claim 17, wherein, in a learning mode, the signal processing device (35) is adapted to calculate a distance signal and to store it in the memory (37) as reference value;
and wherein, in a detection mode, the signal processing device (35) is adapted to always compare the momentaneously calculated distance signal with the reference value stored in the memory (37).

19. Detection system according to claim 17, wherein, in a detection mode, the signal processing device (35) is adapted to store the momentaneously calculated distance signal in the memory (38) as previous distance signal;
and wherein, in the detection mode, the signal processing device (35) is adapted to always compare the momentaneously calculated distance signal with the previous distance signal stored in the memory (38).

20. Detection system according to any of the claims 12-19,
wherein the signal processing device (35) is adapted to analyse the signals received from the sensor (34), and to only generate the movement report signal (S_{F}) if the established variation of the distance signal or distance profile, respectively, exceeds certain predetermined criteria.

21. Local verification system (4) for verifying a report signal (S_{F}) generated by a primary detection system according to any of the claims 12-19, which signal indicates the occurrence of a detected event, and contains information about the location (direction and distance) of the detected event, which verification system (4) comprises:
a controllable camera (51), preferably a digital camera;
a camera control circuit (55) with a signal input (55i) for receiving the report signal (S_{F}) and with a control output (55c) coupled with a control input of the camera (51);
wherein the camera control circuit (55) is adapted, in response to receiving the report signal (S_{F}), to direct the camera (51) to and to focus the camera (51) on the location indicated by the report signal (S_{F}).

22. Local verification system according to claim 21, further comprising an image memory (57), wherein the verification system (4) is adapted, in response to receiving the report signal (S_{F}), to store into the image memory (57) the image signals (S_{B}) obtained by the camera (51) of the said location indicated by the report signal (S_{F}).

23. Local verification system according to claim 21 or 22, further comprising an image processing device (56) adapted for analysing image signals (S_{B}) obtained by the camera (51).

24. Local verification system according to claim 23, adapted to make contact with an external verification system (5) via a communication line (6), and to send image signals (SB) obtained by the camera (51) of the said location indicated by the report signal (SF) to this external verification system (5) via the said communication line (6), if the image processing device (56) analyses the received image signals as being indicative for a potentially threatening situation.

25. Local verification system according to claim 24, adapted to send image signals (SB) obtained by the camera (51) in real time.

26. Local verification system according to claim 22 and 24, adapted to send image signals (SB) stored in the image memory (57).

27. External verification system (5), comprising:
communication means for receiving image signals (SB) sent via a communication line (6) by a local verification system according to any of claims 21-26;
a screen (61) being observable by a verifier for displaying the image signals;
communication means (63) being operable by the verifier, suitable for calling in a guarding service (7);
wherein the external verification system (5) preferably further comprises an image memory (62) for storing received image signals (SB).

28. Alarm installation (2), adapted for generating an outgoing signal (S_{B}) when detecting an event, which alarm installation comprises:
a primary detection system (3) according to any of the claims 12-20 for detecting a potential event;
a local verification system (4) according to any of the claims 21-26 coupled with the primary detection system (3) for verifying the potential event detected by the primary detection system (3);
wherein the functioning principle of the local verification system (4) differs from the functioning principle of the primary detection system (3);
wherein the outgoing signal (S_{B}) is exclusively generated if the local verification system (4) confirms the potential event detected by the primary detection system (3).

29. Verification system (8) for verifying a potential event detected by a detection system (3) according to any of the claims 12-20, and for calling in a guarding service (7) on confirmation of the potential event detected by the primary detection system (3), which verification system (8) comprises:
a local verification system (4) according to any of the claims 21-26;
an external verification system (5);
a communication line (6) between the local verification system (4) and the external verification system (5);
wherein the local verification system (4) is adapted for sending image signals (S_{B}) via the communication line (6);
wherein the external verification system (5) is adapted for receiving image signals (S_{B}) sent by the local verification system via the communication line (6);
and wherein the external verification system (5) comprises:
- a screen (61) being observable by a verifier for displaying the image signals;
- communication means (63) being operable by the verifier, suitable for calling in a guarding service (7).

30. Security system (1), comprising:
an alarm installation (2) according to claim 28;
an external verification system (5) according to claim 27;
a communication line (6) between the local verification system (4) and the external verification system (5).

## Patentansprüche

1. Verfahren zum Erfassen eines sich bewegenden Objekts (46; 47) auf einem Gelände (40), die Schritte aufweisend:
Messen eines Entfernungsprofils des Geländes (40) bezüglich einer Messvorrichtung (31, 34);
Vergleichen des gemessenen Entfernungsprofils mit einem Referenzentfernungsprofil;
Feststellen eines sich bewegenden Objekts, wenn sich das gemessene Entfernungsprofil von dem Referenzentfernungsprofil unterscheidet;
wobei der Schritt des Messens eines Entfernungsprofils des Geländes (40) den Schritt des Messens der Entfernung von einer Messvorrichtung (31, 34) zum am nächsten liegenden Objekt (41, 42, 43, 44, 45, 46, 47) in einer hohen Anzahl (N) an Richtungen und in Zufallsreihenfolge aufweist, basierend auf einem Lichtimpuls, vorzugsweise Laserlicht, das von der Messvorrichtung ausgestrahlt und vom Objekt reflektiert wird.

2. Verfahren gemäß Anspruch 1, wobei das Referenzentfernungsprofil ein Entfernungsprofil desselben Geländes (40) ist, das zu einem früheren Zeitpunkt gemessen wurde.

3. Verfahren gemäß Anspruch 2, weiterhin die Schritte aufweisend:
in einem Lernmodus Messen des Entfernungsprofils des Geländes (40);
danach Verwenden des im Lernmodus gemessenen Entfernungsprofils als Referenzentfernungsprofil in jeder nachfolgenden Messung zum Erfassen eines sich bewegenden Objekts.

4. Verfahren gemäß Anspruch 2, wobei das neu gemessene Entfernungsprofil immer als Referenzentfernungsprofil in der nachfolgenden Messung verwendet wird.

5. Verfahren gemäß einem der Ansprüche 1 -4, weiterhin den Schritt der Ausgabe eines Berichtsignals (S_{F}) aufweisend, das Information über die Richtung und Entfernung des erfassten sich bewegenden Objekts enthält, wenn ein sich bewegendes Objekt (46; 47) erfasst wird.

6. Verfahren zur lokalen Verifizierung eines Berichts eines sich bewegenden Objekts auf einem Gelände (40), wobei das Verfahren die Schritte aufweist:
Empfangen eines Berichtsignals (S_{F}), das das Auftreten eines erfassten möglichen Ereignisses anzeigt, wobei das Berichtsignal (S_{F}) mit dem Verfahren von Anspruch 5 ausgegeben wird;
Ausrichten und Fokussieren einer Kamera (51) basierend auf der Information;
wobei das Verfahren vorzugsweise weiterhin die Schritte aufweist:
Empfangen von Bildsignalen (S_{B}) von der Kamera;
Analysieren der von der Kamera empfangenen Bildsignale mit Hilfe einer Bilderkennungsvorrichtung oder Bilderkennungssoftware.

7. Verfahren gemäß Anspruch 6, weiterhin den Schritt aufweisend:
Übertragen der Bildsignale (S_{B}) von der Kamera an ein externes Überprüfungssystem (5), wenn das Analyseergebnis ein tatsächliches Ereignis anzeigt.

8. Verfahren gemäß Anspruch 7, wobei die Echtzeit-Bildsignale (S_{B}) von der Kamera an ein externes Überprüfungssystem übertragen werden.

9. Verfahren gemäß Anspruch 7, weiterhin die Schritte aufweisend:
Speichern der Bildsignale (S_{B}) von der Kamera in einem Bildspeicher (57) als Reaktion auf den Empfang des Berichtsignals (S_{F});
und Übertragen der Bildsignale (S_{B}) von dem Bildspeicher an das externe Überprüfungssystem.

10. Verfahren zum Sichern eines Geländes (40), die Schritte aufweisend:
in einem ersten Schritt Erfassen eines möglicherweise sich bewegenden Objekts und Ausgeben eines Berichtsignals (S_{F}), das Information über die Richtung und die Entfernung des erfassten möglicherweise sich bewegenden Objekts enthält, wobei das Berichtsignal (S_{F}) mit dem Verfahren von Anspruch 5 ausgegeben wird;
in einem zweiten Schritt die lokale Verifizierung des Berichts des möglicherweise sich bewegenden Objekts mit dem Verfahren von Anspruch 6; in einem dritten Schritten das Übertragen der Kamerabilder (S_{B}) an ein externes Überprufungssystem (5).

11. Verfahren gemäß Anspruch 10, weiterhin einen vierten Schritt aufweisend, indem ein Prüfer des externen Überprüfungssystems (5) einen Wachdienst (7) oder Ähnliches einschaltet.

12. Primäres Erfassungssystem zum Erfassen eines sich bewegenden Objekts (46; 47) auf einem Gelände (40), wobei das System Mittel (31, 34, 35) zum Messen eines Entfernungsprofils des Geländes (40) bezüglich einer Messvorrichtung (31, 34) aufweist, wobei die Mittel (31, 34, 35) umfassen:
- eine steuerbare Lichtquelle (31), ausgebildet zum Erzeugen eines Erfassungslichtstrahls (32) mit einem Lichtsignal in Impulsform, wobei die Lichtquelle (31) vorzugsweise einen Laser aufweist;
- einen Sensor (34) zum Empfangen des reflektierten Lichts (33);
- eine Signalverarbeitungseinrichtung (35) mit einem Signaleingang (35i) zum Empfangen eines Ausgangssignals von dem Sensor (34) und mit einem Signalausgang (350) zum Ausgeben eines Bewegungsberichtsignals (S_{F}) ;
wobei die Signalverarbeitungseinrichtung (35) ausgebildet ist, um ein Entfernungssignal von dem vom Sensor empfangenen Signal zu berechnen,
wobei das Entfernungssignal eine Entfernung von einem reflektierenden Objekt (O) zur Lichtquelle (31) und dem Sensor (34) darstellt;
wobei die Signalverarbeitungsvorrichtung (35) ausgebildet ist, um das Entfernungssignal zu überwachen, um Variationen darin zu erfassen;
und wobei die Signalverarbeitungsvorrichtung (35) ausgebildet ist, um ein Bewegungsberichtsignal (S_{F}) an dem Signalausgang (350) davon zu generieren, wenn eine Variation des Entfernungssignals erfasst wird;
wobei das Entfernungsprofil eine Kombination aus einer Anzahl (N) von Erfassungsrichtungen relativ zur Messvorrichtung (31, 34) und von Entfernungssignalen entsprechend den zugehörigen Erfassungsrichtungen aufweist, wobei die Signale die Entfernungen von der Messvorrichtung (31, 34) zu einem Objekt (O) darstellen, die entlang den entsprechenden Erfassungsrichtungen gemessen wurden;
wobei die Lichtquelle (35) ausgebildet ist, um mehrere Erfassungslichtstrahlen (32) in mehreren Richtungen auszusenden und einen Erfassungslichtstrahl (32) in einer Richtung auszusenden, die durch ein Richtungssteuerungssignal bestimmt wird, als Reaktion auf ein Richtungssteuerungssignal das an einem Steuerungseingang empfangen wurde;
und wobei die Signalverarbeitungsvorrichtung (35) ausgebildet ist, um Richtungssteuerungssignale für die Lichtquelle (35) in einer Zufallsreihenfolge zu generieren.

13. Erfassungssystem gemäß Anspruch 12, wobei die Signalverarbeitungsvorrichtung (35) zum Definieren einer Anzahl (N) von Erfassungsrichtungen ausgebildet ist;
und wobei die Signalverarbeitungsvorrichtung (35) ausgebildet ist, um ein Entfernungsprofil des Geländes (40) wiederholt zu messen, indem nacheinander Richtungssteuerungssignale zur steuerbaren Lichtquelle (35) gesendet werden, wobei die Richtungssteuerungssignale den definierten (N) Erfassungsrichtungen entsprechen.

14. Erfassungssystem gemäß Anspruch 13, wobei die Signalverarbeitungsvorrichtung (35) ausgebildet ist, um die Richtungssteuerungssignale immer in derselben Reihenfolge zu erzeugen.

15. Erfassungssystem gemäß einem der Ansprüche 12 - 14, wobei die Signalverarbeitungsvorrichtung (35) einen Steuerungsausgang (35c) aufweist, der mit einem Steuerungseingang der Lichtquelle (31) verbunden ist;
wobei die Signalverarbeitungsvorrichtung (35) ausgebildet ist, um an dem Steuerungsausgang (35c) davon ein Impulsbefeblssignal für die Lichtquelle (31) zu generieren;
und wobei die Lichtquelle (31) ausgebildet ist, um ein Lichtsignal in Impulsform als Reaktion auf den Empfang eines Impulsbefehlsignals an dem Steuerungseingang davon zu generieren.

16. Erfassungssystem gemäß Anspruch 15, wobei die Signalverarbeitungsvorrichtung (35) ausgebildet ist, um als Entfernungssignal die Zeitdifferenz zwischen dem Zeitpunkt des Generierens des Impulsbefehlsignals und dem Zeitpunkt des Empfangs des Sensorausgangssignals zu verwenden.

17. Erfassungssystem gemäß einem der Ansprüche 12 - 16,
weiterhin aufweisend einen Speicher (37; 38) zum Speichern wenigstens eines gemessenen Entfernungssignals;
wobei die Signalverarbeitungsvorrichtung (35) ausgebildet ist, um ein augenblicklich berechnetes Entfernungssignal mit dem im Speicher (37; 38) gespeicherten Entfernungssignal zu vergleichen und einen festgestellten Unterschied als eine Bewegung des Objekts zu interpretieren.

18. Erfassungssystem gemäß Anspruch 17, wobei in einem Lernmodus die Signalverarbeitungsvorrichtung (35) ausgebildet ist, um ein Entfernungssignal zu berechnen und es im Speicher (37) als Referenzwert zu speichern;
und wobei in einem Erfassungsmodus die Signalverarbeitungsvorrichtung (35) ausgebildet ist, um das augenblicklich berechnete Entfernungssignal immer mit dem im Speicher (37) gespeicherten Referenzwert zu vergleichen.

19. Erfassungssystem gemäß Anspruch 17, wobei in einem Erfassungsmodus die Signalverarbeitungsvornchtung (35) ausgebildet ist, um das augenblicklich berechnete Entfernungssignal im Speicher als (38) als vorhergehendes Entfernungssignal zu speichern;
und wobei die Signalverarbeitungsvorrichtung (35) im Erfassungsmodus ausgebildet ist, um das augenblicklich berechnete Entfernungssignal immer mit dem zuvor berechneten Entfernungssignal, das im Speicher (38) gespeichert ist, zu vergleichen.

20. Erfassungssystem gemäß einem der Ansprüche 12 - 19,
wobei die Signalverarbeitungsvorrichtung (35) ausgebildet ist, um die vom Sensor (34) empfangenen Signale zu analysieren und das Bewegungsberichtsignal (S_{F}) nur zu generieren, wenn die festgestellte Variation des Entfernungssignals beziehungsweise des Entfernungsprofils bestimmte vorab festgelegte Kriterien überschreitet.

21. Lokales Überprüfungssystem (4) zum Verifizieren eines Berichtsignals (S_{F}), das von einem primären Erfassungssystem generiert wurde, gemäß einem der Ansprüche 12 - 19, wobei das Signal das Auftreten einer erfassten Ereignisses anzeigt und Informationen über die Position (Richtung und Entfernung) des erfassten Ereignisses enthält, wobei das Überprufungssystem (4) aufweist:
eine steuerbare Kamera (51), vorzugsweise eine Digitalkamera;
eine Kamerasteuerungsschaltung (55) mit einem Signaleingang (55i) zum Empfangen des Berichtsignals (S_{F}) und mit einem Steuerungsausgang (55c), der mit einem Steuerungseingang der Kamera (51) verbunden ist;
wobei die Kamerasteuerungsschaltung (55) ausgebildet ist, um als Reaktion auf den Empfang des Berichtsignals (S_{F}) die Kamera (51) auf die durch das Berichtsignal (S_{F}) angezeigte Position auszurichten und zu fokussieren.

22. Lokales Überprükngssystem gemäß Anspruch 21, weiterhin aufweisend einen Bildspeicher (57), wobei das Überprüfungssystem (4) ausgebildet ist, um als Reaktion auf den Empfang des Berichtsignals (S_{F}) die von der Kamera (51) erhaltenen Bildsignale (S_{B}) der Position, die vom Berichtsignal (S_{F}) angezeigt wurde, im Bildspeicher (57) zu speichern.

23. Lokales Überprüfungssystem gemäß Anspruch 21 oder 22, weiterhin aufweisend eine Bildverarbeitungsvorrichtung (56), die zur Analyse der Bildsignale (S_{B}) ausgebildet ist, die von der Kamera (51) empfangen wurden.

24. Lokales Überprüfungssystem gemäß Anspruch 23, ausgebildet zum Herstellen einer Verbindung mit einem externen Überprüfungssystem (5) über eine Datenübertragungsleitung (6) und zum Senden der von der Kamera (51) erhaltenen Bildsignale (SB) von der Position, die durch das Berichtsignal (S_{F}) angezeigt wird, an das externe Überprüfungssystem (5) über die Datenübertragungsleitung (6), wenn die Bildverarbeitungsvorrichtung (56) die empfangenen Bildsignale als eine möglicherweise bedrohliche Situation anzeigend analysiert.

25. Lokales Überprüfungssystem gemäß Anspruch 24, ausgebildet zum Senden der von der Kamera (51) erhaltenen Bildsignale (SB) in Echtzeit.

26. Lokales Überprüfungssystem gemäß Anspruch 22 und 24, ausgebildet zum Senden von Bildsignalen (SB), die im Bildspeicher (57) gespeichert sind.

27. Externes Überprüfungssystem (5), aufweisend:
Datenübertragungsmittel zum Empfangen von Signalen (SB), die über eine Datenübertragungsleitung (6) von einem lokalen Überprüfungssystem gemäß einem der Ansprüche 21 - 26 gesendet wurden;
einen Bildschirm (61), der von einem Prüfer beobachtbar ist, zum Anzeigen der Bildsignale;
Datenübertragungsmittel (63), die von dem Prüfer betreibbar sind, geeignet zum Einschalten eines Wachdienstes (7);
wobei das externe Überprüfungssystem (5) vorzugsweise weiterhin einen Bildspeicher (62) zum Speichern der empfangenen Bildsignale (SB) enthält.

28. Alarminstallation (2), ausgebildet zum Generieren eines Ausgangssignals (S_{B}), wenn ein Ereignis erfasst wird, wobei die Alarminstallation aufweist:
ein primäres Erfassungssystem (3) gemäß einem der Ansprüche 12 - 20 zum Erfassen eines möglichen Ereignisses;
ein lokales Überprüfungssystem (4) gemäß einem der Ansprüche 21- 26, verbunden mit dem primären Erfassungssystem (3) zum Verifizieren eines möglichen Ereignisses, das vom primären Erfassungssystem (3) erfasst wird;
wobei das Funktionsprinzip des lokalen Überprüfungssystems (4) sich von dem Funktionsprinzip des primären Erfassungssystem (3) unterscheidet;
wobei das Ausgangssignal (S_{B}) ausschließlich generiert wird, wenn das lokale Überprüfungssystem (4) das mögliche Ereignis bestätigt, das vom primären Erfassungssystem (3) erfasst wird.

29. Überprüfungssystem (8) zum Verifizieren eines möglichen Ereignisses, das von einem Erfassungssystem (3) gemäß einem der Ansprüche 12 - 20 erfasst wird, und zum Einschalten eines Wachdienstes (7) bei Bestätigung des möglichen Ereignisses, das durch das primäre Erfassungssystem (3) erfasst wurde, wobei das Überprüfungssystem (8) aufweist:
ein lokales Überprüfungssystem (4) gemäß einem der Ansprüche 21 - 26;
ein externes Überprüfungssystem (5);
eine Datenübertragungsleitung (6) zwischen dem lokalen Überprüfungssystem (4) und dem externen Überprüfungssystem (5);
wobei das lokale Überprüfungssystem (4) zum Senden von Bildsignalen (S_{B}) über die Datenübertragungsleitung (6) ausgebildet ist;
wobei das externe Überprüfungssystem (5) für den Empfang von Bildsignalen (S_{B}) ausgebildet ist, die von dem lokalen Überprüfungssystem über die Datenübertragungsleitung (6) gesendet wurden;
und wobei das externe Überprüfungssystem (5) aufweist:
- einen Bildschirm (61), der von einem Prüfer beobachtbar ist, zur Anzeige der Bildsignale;
- Datenübertragungsmittel (63), die von dem Prüfer betreibbar sind, geeignet zum Einschalten eines Wachdienstes (7).

30. Sicherheitssystem (1) aufweisend:
eine Alarminstallation (2) gemäß Anspruch 28;
ein externes Überprüfungssystem (5) gemäß Anspruch 27;
eine Datenübertragungsleitung (6) zwischen dem lokalen Überprüfungssystem (4) und dem externen Überprüfungssystem (5).

## Revendications

1. Procédé de détection d'un objet mobile (46; 47) sur un terrain (40), comprenant les étapes consistant à :
mesurer le profil de distance du terrain (40) au moyen d'un appareil de mesure (31, 34) ;
comparer le profil de distance mesuré à un profil de distance de référence ;
déterminer qu'un objet se déplace si le profil de distance mesuré diffère du profil de distance de référence ;
dans lequel l'étape de mesure du profil de distance du terrain (40) comprend l'étape consistant à mesurer la distance allant d'un appareil de mesure (31, 34) jusqu'à l'objet le plus proche (41, 42, 43, 44, 45, 46, 47) dans un grand nombre (N) de directions et dans un ordre aléatoire, en se basant sur une impulsion lumineuse, de préférence de lumière laser, émise par l'appareil de mesure et réfléchie par l'objet.

2. Procédé selon la revendication 1, dans lequel le profil de distance de référence est un profil de distance du même terrain (40) mesuré précédemment.

3. Procédé selon la revendication 2, comprenant en outre les étapes consistant à :
dans un mode d'apprentissage, mesurer le profil de distance du terrain (40) ;
utiliser ensuite ce profil de distance mesuré dans le mode d'apprentissage en tant que profil de distance de référence dans chaque mesure suivante pour détecter un objet mobile.

4. Procédé selon la revendication 2, dans lequel le profil de distance nouvellement mesuré est toujours utilisé en tant que profil de distance de référence dans la mesure qui suit.

5. Procédé selon l'une quelconque des revendications 1 à 4, comprenant en outre l'étape consistant à délivrer un signal de rapport (S_{F}) contenant des informations relatives à la direction et à la distance de l'objet mobile détecté, si un objet mobile (46; 47) est détecté.

6. Procédé pour vérifier localement le rapport d'un objet mobile sur un terrain (40), le procédé comprenant les étapes consistant à :
recevoir un signal de rapport (S_{F}) indiquant l'aspect d'un événement potentiel détecté, dans lequel le signal de rapport (S_{F}) est délivré avec le procédé selon la revendication 5 ;
diriger une caméra (51) et la mettre au point, en se basant sur lesdites informations ;
le procédé comprenant en outre de préférence les étapes consistant à :
recevoir des signaux d'image (S_{B}) depuis la caméra ;
analyser les signes d'image reçus depuis la caméra en utilisant un dispositif de reconnaissance d'image ou un logiciel de reconnaissance d'image.

7. Procédé selon la revendication 6, comprenant en outre l'étape consistant à :
transférer les signaux d'image (S_{B}) provenant de la caméra à un système de vérification externe (5) si le résultat de l'analyse indique un événement réel.

8. Procédé selon la revendication 7, dans lequel les signaux d'image en temps réel (S_{B}) provenant de la caméra sont transférés au système de vérification externe.

9. Procédé selon la revendication 7, comprenant en outre les étapes consistant à :
en réponse à la réception du signal de rapport (S_{F}), enregistrer dans une mémoire d'image les signaux d'image (S_{B}) provenant de la caméra ;
et transférer les signaux d'image (S_{B}) de la mémoire d'image au système de vérification externe.

10. Procédé de sécurisation d'un terrain (40), comprenant les étapes consistant à :
dans une première étape, détecter un objet mobile potentiel, et délivrer un signal de rapport (S_{F}) contenant des informations relatives à la direction et à la distance de l'objet mobile potentiel détecté, dans lequel le signal de rapport (S_{F}) est délivré avec le procédé selon la revendication 5 ;
dans une deuxième étape, vérifier localement le rapport de l'objet mobile potentiel avec le procédé selon la revendication 6 ;
dans une troisième étape, transférer les images provenant de la caméra (S_{B}) à un système de vérification externe (5).

11. Procédé selon la revendication 10, comprenant en outre une quatrième étape dans laquelle un vérificateur du système de vérification externe (5) appelle un service de gardiennage (7) ou analogue.

12. Système de détection primaire pour détecter un objet mobile (46; 47) sur un terrain (40), le système comprenant des moyens (31, 34, 35) pour mesurer le profil de distance du terrain (40) au moyen d'un appareil de mesure (31, 34), dans lequel lesdits moyens (31, 34, 35) comprennent :
- une source lumineuse contrôlable (31) adaptée à générer un faisceau lumineux de détection (32) avec un signal lumineux de forme impulsionnelle, source lumineuse (31) comprenant de préférence un laser ;
- un capteur (34) pour recevoir la lumière réfléchie (33) ;
- un dispositif de traitement de signal (35), avec une entrée de signal (35i) pour recevoir un signal de sortie provenant du capteur (34), et avec une sortie de signal (35o) pour délivrer un signal de rapport de mouvement (S_{F}) ;
dans lequel le dispositif de traitement de signal (35) est adapté à calculer un signal de distance d'après le signal reçu provenant du capteur, signal de distance qui est représentatif de la distance allant d'un objet réfléchissant (O) jusqu'à la source lumineuse (31) et au capteur (34) ;
dans lequel le dispositif de traitement de signal (35) est adapté à surveiller le signal de distance pour être capable de détecter ses variations ;
et dans lequel le dispositif de traitement de signal (35) est adapté à générer un signal de rapport de mouvement (S_{F}) à sa sortie de signal (35o) lors de la détection d'une variation du signal de distance ;
dans lequel le profil de distance comprend une combinaison d'un nombre (N) de directions de détection au moyen d'un appareil de mesure (31, 34), et avec des signaux de distance correspondant aux directions de détection respectives, signaux qui sont représentatifs des distances de l'appareil de mesure (31, 34) jusqu'à un objet (O), mesurées le long des directions de détection respectives ;
dans lequel la source lumineuse (35) est adaptée à émettre des faisceaux lumineux de détection multiples (32) dans des directions multiples, et à émettre un faisceau lumineux de détection (32) dans une direction déterminée par le signal de contrôle de direction en réponse à un signal de contrôle de direction reçu sur une entrée de contrôle ;
et dans lequel le dispositif de traitement de signal (35) est adapté à générer des signaux de contrôle de direction pour la source lumineuse (35) dans un ordre aléatoire.

13. Système de détection selon la revendication 12, dans lequel le dispositif de traitement de signal (35) est adapté à définit à un nombre (N) de directions de détection ;
et dans lequel le dispositif de traitement de signal (35) est adapté à mesurer de façon répétée le profil de distance du terrain (40) en envoyant successivement des signaux de contrôle de direction à la source lumineuse contrôlable (35), signaux de contrôle de direction qui correspondent aux (N) directions définies.

14. Système de détection selon la revendication 13, dans lequel le dispositif de traitement de signal (35) est adapté à générer toujours dans le même ordre les signaux de contrôle de direction.

15. Système de détection selon l'une quelconque des revendications 12 à 14, dans lequel le dispositif de traitement de signal (35) comporte une sortie de contrôle (35c) couplée à une entrée de contrôle de la source lumineuse (31) ;
dans lequel le dispositif de traitement de signal (35) est adapté à générer à sa sortie de contrôle (35c) un signal de commande impulsionnel pour la source lumineuse (31) ;
et dans lequel la source lumineuse (31) est adaptée à générer un signal lumineux de forme impulsionnelle en réponse à la réception du signal de commande impulsionnel sur son entrée de contrôle.

16. Système de détection selon la revendication 15, dans lequel le dispositif de traitement d'image (35) est adapté à prendre comme signal de distance la différence de temps entre l'instant de la génération du signal de commande impulsionnel et l'instant de réception du signal de sortie provenant du capteur.

17. Système de détection selon l'une quelconque des revendications 12 à 16, comprenant en outre une mémoire (37; 38) pour enregistrer au moins un signal de distance mesuré ;
dans lequel le dispositif de traitement de signal (35) est adapté à comparer un signal de distance calculé momentanément au signal de distance enregistré dans la mémoire (37; 38) et à interpréter une différence déterminée en tant que mouvement de l'objet.

18. Système de détection selon la revendication 17, dans lequel, dans un mode d'apprentissage, le dispositif de traitement de signal (35) est adapté à calculer un signal de distance et à l'enregistrer dans la mémoire (37) en tant que valeur de référence ;
et dans lequel, dans un mode de détection, le dispositif de traitement de signal (35) est adapté à toujours comparer le signal de distance calculé momentanément à la valeur de référence enregistrée dans la mémoire (37).

19. Système de détection selon la revendication 17, dans lequel, dans un mode de détection, le dispositif de traitement de signal (35) est adapté à enregistrer dans la mémoire (38) le signal de distance calculé momentanément en tant que signal de distance précédent ;
et dans lequel, dans le mode de détection, le dispositif de traitement de signal (35) est adapté à toujours comparer le signal de distance calculé momentanément au signal de distance précédent enregistré dans la mémoire (38).

20. Système de détection selon l'une quelconque des revendications 12 à 19, dans lequel le dispositif de traitement de signal (35) est adapté à analyser les signaux reçus provenant du capteur (34), et à générer le signal de rapport de mouvement (S_{F}) uniquement si la variation déterminée du signal de distance du profil de distance dépasse respectivement certains critères prédéterminés.

21. Système de vérification local (4) pour vérifier un signal de rapport (S_{F}) généré par un système de détection primaire selon l'une quelconque des revendications 12 à 19, signal indiquant l'apparition d'un événement détecté, et contenant des informations relatives à l'emplacement (direction et distance) de l'événement détecté, système de vérification (4) comprenant :
une caméra contrôlable (51), de préférence une caméra numérique ;
un circuit de contrôle de caméra (55) avec une entrée de signal (55i) pour recevoir le signal de rapport (S_{F}) et avec une sortie de contrôle (55c) couplée à une entrée de contrôle de la caméra (51) ;
dans lequel le circuit de contrôle de caméra (55) est adapté, en réponse à la réception du signal de rapport (S_{F}), à diriger la caméra (51) sur l'emplacement indiqué par le signal de rapport (S_{F}) et à la mettre au point sur celui-ci.

22. Système de vérification local selon la revendication 21, comprenant en outre une mémoire d'image (57), dans lequel le système de vérification (4) est adapté, en réponse à la réception du signal de rapport (S_{F}), à enregistrer dans la mémoire d'image (57) les signaux d'image (S_{B}) obtenus par la caméra (51) dudit emplacement indiqué par le signal de rapport (S_{F}).

23. Système de vérification local selon la revendication 21 ou 22, comprenant en outre un dispositif de traitement d'image (56) adapté à analyser les signaux d'image (S_{B}) obtenus par la caméra (51).

24. Système de vérification local selon la revendication 23, adapté à établir un contact avec un système de vérification externe (5) par l'intermédiaire d'une ligne de communication (6), et à envoyer à ce système de vérification externe (5) des signaux d'image (SB) dudit emplacement indiqué par le signal de rapport (SF), obtenus par la caméra (51), par l'intermédiaire de ladite ligne de communication (6), si le dispositif de traitement d'image (56) analyse que les signaux d'image reçus indiquent une situation de menace potentielle.

25. Système de vérification local selon la revendication 24, adapté à envoyer en temps réel les signaux d'image (SB) obtenus par la caméra (51).

26. Système de vérification local selon les revendications 22 et 24, adapté à envoyer les signaux d'image (SB) enregistrés dans la mémoire l'image (57).

27. Système de vérification externe (5), comprenant :
des moyens de communication pour recevoir des signaux d'image (SB) envoyés par l'intermédiaire d'une ligne de communication (6) par un système de vérification local selon l'une quelconque des revendications 21 à 26 ;
un écran (61) observable par un vérificateur pour afficher les signaux d'image ;
des moyens de communication (63) pouvant être actionnés par le vérificateur, adaptés à appeler un service de gardiennage (7) ;
dans lequel le système de vérification externe (5) comprend en outre de préférence une mémoire d'image (62) pour enregistrer les signaux d'image reçus (SB).

28. Installation d'alarme (2), adaptée à générer un signal de sortie (S_{B}) lors de la détection d'un événement, installation d'alarme comprenant :
un système de détection primaire (3) selon l'une quelconque des revendications 12 à 20 pour détecter un événement potentiel ;
un système de vérification local (4) selon l'une quelconque des revendications 21 à 26, couplé au système de détection primaire (3) pour vérifier l'événement potentiel détecté par le système de détection primaire (3) ;
dans lequel le principe de fonctionnement du système de vérification local (4) diffère du principe de fonctionnement du système de détection primaire (3) ;
dans lequel le signal de sortie (S_{B}) est généré exclusivement si le système de vérification local (4) confirme l'événement potentiel détecté par le système de détection primaire (3).

29. Système de vérification (8) pour vérifier un événement potentiel détecté par un système de détection (3) selon l'une quelconque des revendications 12 à 20, et pour appeler un service de gardiennage (7) en cas de confirmation de l'événement potentiel détecté par le système de détection primaire (3), système de vérification (8) comprenant :
un système de vérification local (4) selon l'une quelconque des revendications 21 à 26 ;
un système de vérification externe (5) ;
une ligne de communication (6) entre le système de vérification local (4) et le système de vérification externe (5) ;
dans lequel le système de vérification local (4) est adapté à envoyer des signaux d'image (S_{B}) par l'intermédiaire de la ligne de communication (6);
dans lequel le système de vérification externe (5) est adapté à recevoir les signaux d'image (S_{B}) envoyés par le système de vérification local par l'intermédiaire de la ligne de communication (6) ;
et dans lequel le système de vérification externe (5) comprend :
- un écran (61) observable par un vérificateur pour afficher les signaux d'image ;
- des moyens de communication (63) pouvant être actionnés par le vérificateur, adaptés à appeler un service de gardiennage (7).

30. Système de sécurité (1) comprenant :
une installation d'alarme (2) selon la revendication 28 ;
un système de vérification externe (5) selon la revendication 27 ;
une ligne de communication (6) entre le système de vérification local (4) et le système de vérification externe (5).
